# FASCICULE DE BREVET EUROPEEN

(11) **EP 1 635 485 B1**
(45) Date de publication et mention de la délivrance du brevet: **15.10.2008**
(21) Numéro de dépôt: 05291852.1
(22) Date de dépôt: 07.09.2005
(51) Int. Cl.: H04B 10/105

(54) **Procédé de transmission optique entre un terminal embarqué sur un engin spatial et un terminal distant, et engin spatial adapté pour un tel procédé**
Optisches Übertragungsverfahren zwischen einem Terminal an Bord eines Raumfahrzeuges, und Raumfahrzeug für das Verfahren
Optical transmission method between an on-board spacecraft terminal and a distant terminal, and spacecraft adapted for said method

(30) Priorité: 13.09.2004 FR 0409691
(43) Date de publication de la demande: 15.03.2006
(73) Titulaire: EADS ASTRIUM SAS, 31402 Toulouse Cedex 4 (FR)
(72) Inventeur: Cazaubel, Vincent, 31500 Toulouse (FR)
(74) Mandataire: Boire, Philippe Maxime Charles

(56) Documents cités:
- WO-A-97/33790
- US-B1- 6 297 897
- US-B1- 6 347 001
- US-B1- 6 484 073

## Description

La présente invention concerne un procédé de transmission optique entre un terminal embarqué sur un engin spatial et un terminal distant, ainsi qu'un engin spatial adapté pour mettre en oeuvre d'un tel procédé.

Il est connu d'utiliser un mode de transmission optique pour établir une liaison de communication avec un dispositif embarqué sur un satellite. De telles transmissions optiques sont utilisées, par exemple, pour des communications entre des satellites appartenant à une même orbite ou à des orbites distinctes, entre un satellite et un terminal au sol, ou entre un satellite et un aéronef, par exemple. Un terminal de transmission optique présente en effet une consommation énergétique très basse, qui est particulièrement avantageuse lorsque ce terminal est embarqué à bord d'un satellite.

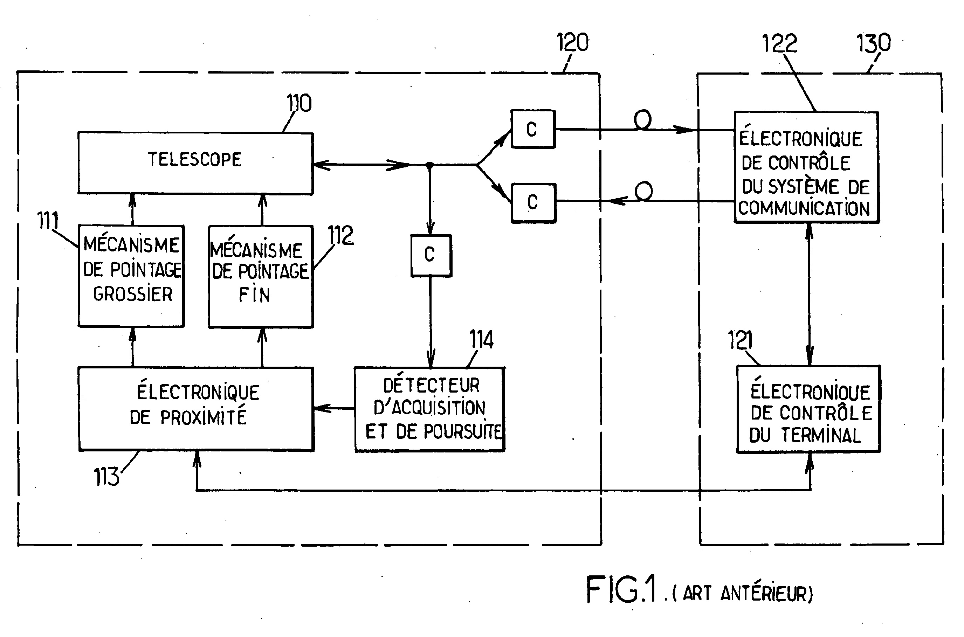

Or, le faisceau de rayonnement utilisé pour une transmission optique présente une divergence très faible. Il est par conséquent nécessaire de pointer très précisément deux terminaux de transmission optique chacun en direction de l'autre, afin d'établir avec succès une liaison de communication. Pour cela, un terminal de transmission optique destiné à être embarqué sur un satellite comprend plusieurs composants connectés selon le diagramme de la figure 1. Le terminal comprend ainsi, dans une partie externe 120 dudit terminal, un télescope de transmission optique 110, des mécanismes 111 et 112 de pointage du télescope 110, un module électronique 113 dit de proximité, ainsi qu'un détecteur d'acquisition et de poursuite 114. Ces composants 110-114 sont connectés de façon à former une boucle d'asservissement de la direction de pointage du télescope 110 vers un terminal distant. Le terminal comprend en outre deux modules électroniques 121 et 122, destinés respectivement au contrôle du terminal de transmission optique et au contrôle du système de communication. Les modules 121 et 122 sont disposés dans une partie 130 fixe du satellite. Les composants notés C sur la figure 1 sont des collimateurs optiques, qui réalisent des interfaces optiques entre deux composants du terminal, ou entre un composant et une fibre optique.

Les mécanismes 111 et 112 forment respectivement, avec les circuits de commande associés intégrés dans le module 113, un système de pointage grossier, ou CPA pour «Coarse Pointing Assembly» en anglais, et un système de pointage fin, ou FPA pour «Fine Pointing Assembly ». Pendant une communication avec un terminal distant, le champ de transmission du terminal embarqué est orienté par rapport au satellite au moyen du système de pointage grossier, de sorte que le terminal distant reste situé dans ce champ de transmission. La direction de transmission est en outre ajustée à l'intérieur du champ de transmission au moyen du système de pointage fin.

Le mécanisme de pointage grossier 111 peut avoir plusieurs formes. Ce peut être, notamment, un périscope articulé, un mécanisme à deux axes déplaçant une tête optique, un mécanisme à miroir de sortie orientable en azimut et en élévation, un télescope de Coudé, etc.

Le mécanisme de pointage grossier possède des parties mobiles telles que, par exemple, un miroir de sortie avec sa monture, dont la taille correspond à l'ouverture de sortie du terminal. Dans certains mécanismes, le terminal de transmission optique lui-même est mobile, notamment lorsqu'il est disposé sur une plate-forme secondaire du satellite, orientable par rapport à la plate-forme principale. Dans tous les cas, les parties mobiles du mécanisme de pointage grossier sont volumineuses et lourdes, et sont, par conséquent, particulièrement pénalisantes pour une utilisation à bord d'un satellite.

En outre, les dimensions et le poids des parties mobiles de ces mécanismes de pointage grossier nécessitent de prévoir, pour les orienter ou les déplacer, des actionneurs de taille et de puissance suffisantes. Ces actionneurs sont alors eux-mêmes lourds et encombrants. En outre, ils présentent une consommation d'énergie en relation avec leur puissance.

Le document US 6 297 897 est un exemple d'engin spatial qui comprend des mécanismes de pointage grossier.

Un but de la présente invention consiste donc à proposer un procédé de transmission optique adapté pour établir une communication avec un engin spatial, et qui, en particulier, ne présente pas les inconvénients cités ci-dessus.

Pour cela, l'invention propose un procédé de transmission optique entre un terminal embarqué sur un engin spatial et un terminal distant dudit engin, suivant lequel le terminal embarqué possède un champ de transmission orienté de façon fixe par rapport à la plate-forme principale de l'engin, et suivant lequel ledit terminal embarqué est pointé vers ledit terminal distant par rotation de ladite plate-forme principale de l'engin.

Dans le cadre de l'invention, on appelle champ de transmission d'un terminal optique la partie de l'espace située à l'extérieur de ce terminal pour laquelle un signal optique qui est émis dans cette partie d'espace peut être détecté par ledit terminal, et pour laquelle un signal optique émis par ce terminal peut être reçu en tout point de ladite partie d'espace.

Ainsi, selon l'invention, le champ de transmission du terminal optique qui est embarqué à bord de l'engin spatial est fixe par rapport à la plate-forme principale de l'engin. Aucun système de pointage grossier n'est donc utilisé pour orienter, par rapport à la plate-forme principale, le champ de transmission du terminal embarqué vers le terminal distant. La charge embarquée à bord de l'engin spatial est donc réduite, ce qui contribue à diminuer le coût du lancement et/ou du placement en orbite de l'engin.

Le pointage du terminal embarqué vers le terminal distant est obtenu en orientant la plate-forme principale de l'engin spatial par rotation de celle-ci. Dans le jargon de l'Homme du métier, ce pointage est obtenu en adaptant l'attitude de l'engin par rapport aux positions relatives du terminal embarqué et du terminal distant. Les moyens de changement d'attitude de l'engin ont donc aussi une fonction d'orientation du champ de transmission du terminal optique embarqué.

De façon avantageuse, la plate-forme principale de l'engin spatial est orientée au moyen d'au moins un actionneur gyroscopique pour pointer le terminal embarqué vers le terminal distant. Un pointage suffisamment précis peut être ainsi réalisé, d'une façon aisée et rapide, grâce à la finesse d'orientation de l'engin qui est obtenue lors de manoeuvres effectuées en utilisant un ou plusieurs actionneurs gyroscopiques.

Selon le mode de mise en oeuvre préféré de l'invention, le terminal embarqué comprend un télescope et un dispositif de pointage fin adapté pour déplacer une image du terminal distant dans un plan focal du télescope. Une direction de transmission peut alors en outre être ajustée à l'intérieur du champ de transmission du terminal embarqué, au moyen du dispositif de pointage fin. Grâce à un tel dispositif de pointage fin, une transmission optique particulièrement fiable peut être établie entre les deux terminaux, sur une distance de transmission qui peut être très grande, par exemple de plusieurs dizaines de milliers de kilomètres.

Selon un perfectionnement de ce mode de mise en oeuvre de l'invention, des déplacements, dans le plan focal du télescope, de l'image d'un faisceau reçu lors d'une transmission optique en cours sont utilisés pour contrôler le pointage du terminal embarqué vers le terminal distant.

L'invention concerne aussi un engin spatial comprenant une plate-forme principale et un terminal de transmission optique embarqué, ledit terminal embarqué ayant un champ de transmission orienté de façon fixe par rapport à la plate-forme principale. L'engin spatial comprend en outre des moyens d'orientation par rotation de la plate-forme principale qui sont adaptés pour pointer ledit terminal embarqué vers un terminal de transmission optique distant de l'engin.

En particulier, les moyens d'orientation par rotation de la plate-forme principale peuvent comprendre au moins un actionneur gyroscopique.

De façon préférée, le terminal embarqué peut comprendre un télescope et un dispositif de pointage fin agencé pour déplacer une image du terminal distant dans un plan focal du télescope, de façon à ajuster une direction de transmission à l'intérieur du champ de transmission dudit terminal embarqué.

L'engin spatial peut être de différents types, dont, notamment, un satellite, quelque soit la nature de son orbite, ou une sonde interplanétaire.

D'autres particularités et avantages de la présente invention apparaîtront dans la description ci-après d'un exemple de réalisation non limitatif, en référence aux figures annexées, parmi lesquelles :
- la figure 1, déjà décrite, illustre l'architecture d'un terminal de transmission optique tel que connu de l'art antérieur ;
- la figure 2 illustre le principe d'une transmission optique entre deux satellites ; et
- la figure 3 représente schématiquement un satellite équipé d'un terminal de transmission optique mis en oeuvre selon l'invention.

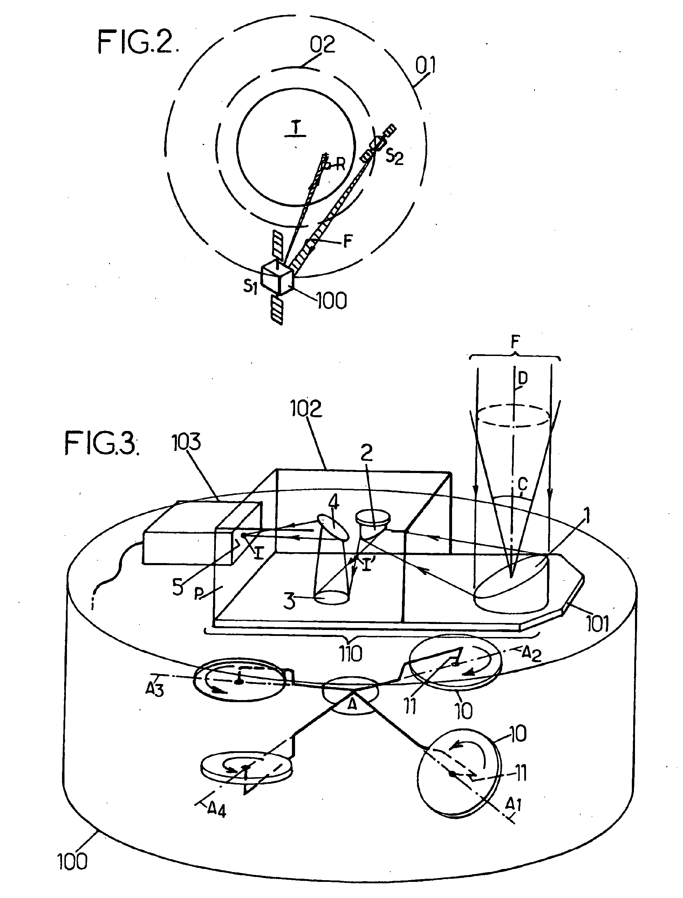

Il est entendu que les figures 2 et 3 illustrent le principe de l'invention de façon simplifiée. En particulier, par souci de clarté, tous les organes d'un satellite ne sont pas représentés. En outre, les dimensions des parties du satellite qui sont représentées ne sont pas en proportion avec des dimensions réelles pour ces parties.

La figure 2 illustre un exemple d'application de l'invention. Un satellite S1, qui peut être géostationnaire, est utilisé pour relayer des données transmises à partir d'un satellite S2 à destination d'un terminal de réception terrestre R. La Terre est désignée par T et l'orbite du satellite S1 est référencée 01. Le satellite S2 peut avoir une fonction d'observation terrestre à haute résolution. Pour cela, il est situé sur une orbite 02 de basse altitude, et possède une vitesse orbitale élevée. Pour le terminal terrestre R, le satellite S2 est masqué par la Terre environ la moitié du temps, de sorte qu'une quantité importante de données ne peut pas être transmise de façon continue entre le satellite S2 et le terminal R. Pour augmenter la durée de transmission entre le satellite S2 et le terminal R, le satellite S1 est utilisé comme relais de transmission : les données sont transmises par le satellite S2 au satellite S1, puis le satellite S1 ré-émet les données au terminal R. La communication entre les deux satellites peut être réalisée par une transmission de type optique, à laquelle s'applique la présente invention.

Conformément à la figure 3, le satellite S1 comprend une plate-forme principale 100, pouvant être de forme générale parallélépipédique ou cylindrique. La plate-forme 100 constitue l'ossature rigide du satellite S1, sur laquelle sont montés les moteurs, les réservoirs d'ergols, des panneaux solaires, des instruments de mesure ou d'observation, des dispositifs de transmission, etc.

Un terminal de transmission optique est fixé sur la plate-forme 100. Ce terminal comprend un télescope de transmission 110, un système de pointage fin (FPA), et une unité d'émission-détection de signal optique 103. Le terminal peut incorporer des modules supplémentaires, tels que des collimateurs, des organes de couplage optique, un filtre de coupure du rayonnement solaire, un système d'alignement de l'unité d'émission-détection, etc. De tels modules sont considérés comme connus de l'Homme du métier et, bien qu'indispensables au fonctionnement du terminal, ne sont pas décrits dans la suite.

Le télescope 110 comprend un miroir principal 1, et des deuxième et troisième miroirs, respectivement référencés 2 et 3. Les miroirs 1 et 3 sont fixés sur une embase 101 du télescope 110, et le miroir 2 est porté par une structure rigide 102, elle-même fixée sur l'embase 101. De façon connue, les miroirs 1 et 3 peuvent être concaves et le miroir 2 peut être convexe. Lorsque le terminal fonctionne en récepteur, un faisceau de transmission optique incident, ayant une configuration de faisceau parallèle et noté F sur les figures 2 et 3, est réfléchi successivement par les miroirs 1, 2 puis 3. Un point d'image I est ainsi formé dans un plan focal P du télescope 110. Le miroir principal 1 constitue la pupille d'entrée du télescope 110 : il détermine l'énergie du signal optique reçu en limitant la section d'une partie du faisceau F qui pénètre dans le terminal. Selon une configuration usuelle des télescopes à trois miroirs, une image intermédiaire l'est formée entre les miroirs 2 et 3. L'unité d'émission-détection 103 possède une fenêtre 5 d'entrée du signal optique qui est placée dans le plan focal P ou est conjuguée optiquement avec ce dernier.

Lorsque le terminal fonctionne en émetteur, un signal otique focalisé sur la fenêtre 5 est produit par l'unité d'émission-détection 103. Ce signal est transformé par le télescope 110 en un faisceau parallèle transmis dans l'espace à la sortie du miroir principal 1. Le chemin suivi dans le télescope 110 par un signal optique émis est identique à celui d'un signal optique reçu, en étant parcouru en sens opposé.

Les miroirs 1, 2 et 3 du télescope 110 sont fixes par rapport à l'embase 101 et à la structure 102, ainsi que par rapport à la plate-forme 100 du satellite S1. En particulier, aucun système mobile d'orientation du télescope 110 n'est disposé entre l'embase 101 et la plate-forme 100. De même, aucun miroir mobile n'est disposé à l'extérieur du télescope 110 pour modifier, par rapport à la plate-forme 100, l'orientation du faisceau reçu F ou celle d'un faisceau transmis par le terminal.

Le champ de transmission C du terminal embarqué sur le satellite S1 est la partie d'espace conique qui a pour sommet le télescope 110 et qui contient les directions de transmission associées, par le télescope 110, à des points d'image situés, dans le plan focal P, à l'intérieur de la fenêtre d'entrée 5 de l'unité d'émission-détection 103. Par conséquent, le champ C est déterminé par les positions relatives des miroirs 1-3 et de l'unité d'émission-détection 103. Il est donc fixe par rapport à la plate-forme 100.

Un tel terminal de transmission optique est par conséquent dépourvu de système de pointage grossier (CPA). Une réduction importante de la masse, de l'encombrement et de la complexité du terminal optique en résulte.

Un miroir supplémentaire 4, pouvant être un miroir plan, est en outre disposé sur le trajet des faisceaux optiques à l'intérieur du télescope 110. Le miroir 4 est disposé au niveau d'une pupille intermédiaire réelle du télescope 110, par exemple au niveau d'une image de la circonférence du miroir principal 1 par les miroirs 2 et 3. Le miroir 4 est l'élément actif du système de pointage fin (FPA) : grâce à des actionneurs précis et à réponse rapide, le miroir 4 est orienté de sorte que la direction de transmission D à la sortie du télescope 110 reste conjuguée à chaque instant avec un point central de la fenêtre 5 de l'unité d'émission-détection 103. Un tel système FPA permet de conserver, à l'intérieur du champ de transmission C, une direction D de transmission fixe en compensant des variations de l'orientation de la plate-forme 100, dues à des perturbations par exemple. A titre d'exemple, le miroir 4 peut être orienté par des actionneurs piézoélectriques ou magnétiques.

En outre, le miroir 4 peut posséder une fonction de repliement du faisceau à l'intérieur du télescope 110, de sorte que terminal optique est compact.

Le satellite S1 comprend en outre un ensemble d'actionneurs gyroscopiques, ou gyrodynes, ou encore CMG pour «Control Moment Gyro» en anglais. Chaque actionneur gyroscopique permet d'orienter le satellite par rotation de la plate-forme principale 100 autour d'un axe déterminé. Conformément à la figure 3, chaque actionneur gyroscopique comporte une roue 10, ou toupie, maintenue en rotation à vitesse sensiblement constante autour de son axe de symétrie de révolution 11, par un moteur d'entraînement non représenté. La roue 10 est reliée à la plate-forme 100 par un cardan à un axe, de sorte qu'elle peut en outre être tournée autour d'un axe secondaire AA₁ par un moteur d'attitude, non représenté. L'axe AA₁ est contenu dans le plan de la roue 10 et est fixe par rapport à la plate-forme 100. Par effet gyroscopique, une rotation de la roue 10 autour de l'axe AA₁, commandée à l'aide du moteur d'attitude, provoque un couple de réaction sur la plate-forme 100, qui fait tourner cette dernière autour d'un axe déterminé.

Deux actionneurs gyroscopiques suffisent pour réaliser un pilotage 2 axes de l'orientation du satellite. Dans la pratique, on utilise en général au moins quatre actionneurs gyroscopiques disposés en grappe pour assurer un pilotage 3 axes tout en garantissant une redondance. Sur la figure 3, les axes respectifs AA₁, AA₂, AA₃ et AA₄ des cardans respectifs des actionneurs gyroscopiques sont disposés selon les arrêtes d'une pyramide de base carrée et de sommet A. Des angles égaux séparent ainsi deux axes de cardans successifs en tournant autour du sommet A. De façon connue, la disposition des axes des cardans peut être adaptée pour obtenir une sensibilité d'orientation de la plate-forme 100, ou agilité, accrue selon certaines directions.

De nombreuses méthodes peuvent être utilisées pour maintenir la plate-forme principale d'un satellite dans une orientation, ou attitude, déterminée. Par exemple, des directions de référence sont repérées par des capteurs montés sur la plate-forme, et les moteurs d'attitude respectifs des actionneurs gyroscopiques sont asservis à des mesures de déplacements apparents des directions de référence par rapport à la plate-forme. En utilisant des capteurs très précis pour mesurer ces déplacements apparents, et un mode de commande fin des moteurs d'attitude, une précision d'orientation de la plate-forme 100 du satellite S1 peut être obtenue, qui est suffisante pour orienter le champ de transmission C du terminal optique au cours d'une séquence de communication. Un mode de commande pas à pas des moteurs d'attitude permet en particulier d'obtenir une précision d'orientation suffisante.

Ainsi, le système d'orientation de la plate-forme principale du satellite remplit la fonction d'un système de pointage grossier (CPA). Cette fonction supplémentaire attribuée au système d'orientation de la plate-forme principale du satellite, selon l'invention, peut être combinée de diverses façons avec des fonctions déjà connues, telles que l'orientation de panneaux solaires, l'orientation d'un dispositif de prises de vue, d'un dispositif de transmission radio, etc. Par exemple, des orientations différentes de la plate-forme du satellite peuvent être successivement commandées pour des durées déterminées, pendant lesquelles les différents appareils embarqués qui nécessitent une orientation adaptée du satellite pour leur fonctionnement sont successivement activés.

En particulier, des déplacements, dans le plan focal P du télescope 110, de l'image 1 d'un faisceau F reçu lors d'une transmission optique en cours peuvent être utilisés pour commander les moteurs d'attitude. Dans ce cas, le flux optique de communication transmis au terminal embarqué sur le satellite S1 peut comporter des signaux périodiques de pointage du terminal embarqué, indépendants des signaux de données transmis.

De nombreuses modifications et adaptations d'un satellite équipé d'un terminal de transmission optique peuvent être introduites par rapport à la description détaillée précédente. En particulier, le nombre, la disposition et le mode de commande ou d'asservissement des actionneurs gyroscopiques peuvent être modifiés. De même, un télescope peut être utilisé, qui est d'un type différent de celui qui a été décrit.

Enfin, bien que l'invention a été décrite en détail dans le cas d'un satellite, il est entendu qu'elle peut être appliquée à tous types d'engins spatiaux. En particulier, une sonde interplanétaire peut être équipée de façon analogue, afin d'établir une liaison de transmission avec cette sonde selon le procédé de l'invention.

## Revendications

1. Procédé de transmission optique entre un terminal embarqué sur un engin spatial (S1) et un terminal distant dudit engin, suivant lequel le terminal embarqué possède un champ de transmission (C) orienté de façon fixe par rapport à la plate-forme principale de l'engin (100), et suivant lequel ledit terminal embarqué est pointé vers ledit terminal distant par rotation de ladite plate-forme principale de l'engin.

2. Procédé selon la revendication 1, suivant lequel la plate-forme principale de l'engin (100) est orientée au moyen d'au moins un actionneur gyroscopique (10) pour pointer le terminal embarqué vers le terminal distant.

3. Procédé selon la revendication 1 ou 2, suivant lequel le terminal embarqué comprend un télescope (110) et un dispositif de pointage fin (4) adapté pour déplacer une image (1) du terminal distant dans un plan focal du télescope (P), et suivant lequel une direction de transmission (D) en est outre ajustée à l'intérieur du champ de transmission du terminal embarqué (C) au moyen dudit dispositif de pointage fin.

4. Procédé selon la revendication 3, suivant lequel des déplacements, dans le plan focal du télescope (P), de l'image (1) d'un faisceau (F) reçu lors d'une transmission optique en cours sont utilisés pour contrôler le pointage du terminal embarqué vers le terminal distant.

5. Engin spatial (S1) comprenant une plate-forme principale (100) et un terminal de transmission optique embarqué, ledit terminal embarqué ayant un champ de transmission (C) orienté de façon fixe par rapport à la plate-forme principale, l'engin spatial comprenant en outre des moyens (10) d'orientation par rotation de la plate-forme principale adaptés pour pointer ledit terminal embarqué vers un terminal de transmission optique distant de l'engin.

6. Engin selon la revendication 5, dans lequel lesdits moyens d'orientation par rotation de la plate-forme principale (10) comprennent au moins un actionneur gyroscopique.

7. Engin selon la revendication 5 ou 6, dans lequel le terminal embarqué comprend un télescope (110) et un dispositif de pointage fin (4) agencé pour déplacer une image (I) du terminal distant dans un plan focal du télescope (P), de façon à ajuster une direction de transmission (D) à l'intérieur du champ de transmission dudit terminal embarqué (C).

8. Engin selon l'une quelconque des revendications 5 à 7, comprenant un satellite ou une sonde interplanétaire.

## Claims

1. Method of optical transmission between a terminal onboard a spacecraft (S1) and a terminal remote from said spacecraft, wherein the onboard terminal has a transmission field (C) fixedly oriented relative to the main platform (100) of the spacecraft, and wherein said onboard terminal is pointed toward said remote terminal by rotating said main platform of the spacecraft.

2. Method according to claim 1, wherein the main platform (100) of the spacecraft is oriented by means of at least one gyroscopic actuator (10) in order to point the onboard terminal toward the remote terminal.

3. Method according to claim 1 or 2, wherein the onboard terminal comprises a telescope (110) and a fine pointing device (4) designed to move an image (I) of the remote terminal in a focal plane of the telescope (P), and wherein a transmission direction (D) is furthermore adjusted within the transmission field of the onboard terminal (C) by means of said fine pointing device.

4. Method according to claim 3, wherein displacements, in the focal plane of the telescope (P), of the image (I) of a beam (F) received during an optical transmission in progress, are used to control the pointing of the onboard terminal toward the remote terminal.

5. Spacecraft (S1) comprising a main platform (100) and an onboard optical transmission terminal, said onboard terminal having a transmission field (C) fixedly oriented relative to the main platform, the spacecraft furthermore including means (10) for rotationally orienting the main platform, said means being designed to point said onboard terminal toward an optical transmission terminal remote from the spacecraft.

6. Spacecraft according to claim 5, wherein said means (10) for rotationally orienting the main platform comprise at least one gyroscopic actuator.

7. Spacecraft according to claim 5 or 6, wherein the onboard terminal comprises a telescope (110) and a fine pointing device (4) designed to move an image (I) of the remote terminal in a focal plane of the telescope (P) so as to adjust a transmission direction (D) within the transmission field of said onboard terminal (C).

8. Spacecraft according to any one of claims 5 to 7, comprising a satellite or an interplanetary probe.

## Patentansprüche

1. Verfahren zur optischen Übertragung zwischen einem an Bord eines Raumfahrzeugs (S1) befindlichen Endgeräts und einem von diesem Fahrzeug entfernten Endgerät, wobei das Endgerät an Bord ein Übertragungsfeld (C) aufweist, das in fester Weise bezüglich der Hauptplattform des Fahrzeugs (100) orientiert ist, und wobei das Endgerät an Bord zum entfernten Endgerät ausgerichtet wird durch Drehung der Hauptplattform des Fahrzeugs.

2. Verfahren nach Anspruch 1, wobei die Hauptplattform des Fahrzeugs (100) mittels wenigstens eines gyroskopischen Krafterzeugers (10) orientiert wird, um das Endgerät an Bord zum entfernten Endgerät auszurichten.

3. Verfahren nach Anspruch 1 oder 2, wobei das Endgerät an Bord ein Teleskop (110) und eine Feinausrichtvorrichtung (4) umfasst, die dafür eingerichtet ist, ein Bild (I) des entfernten Endgeräts in einer fokalen Ebene des Teleskops (P) zu verschieben, und wobei eine Übertragungsrichtung (D) ferner im Inneren des Übertragungsfelds (C) des Endgeräts an Bord mittels der Feinausrichtvorrichtung justiert wird.

4. Verfahren nach Anspruch 3, wobei in der fokalen Ebene des Teleskops (P) die Verschiebungen des Bildes (I) eines während einer laufenden optischen Übertragung empfangenen Strahls (F) verwendet werden, um die Ausrichtung des Endgeräts an Bord zum entfernten Endgerät zu überprüfen.

5. Raumfahrzeug (S1), umfassend eine Hauptplattform (100) und ein an Bord befindliches optisches Übertragungsendgerät, wobei das Endgerät an Bord ein Übertragungsfeld (C) aufweist, das in fester Weise bezüglich der Hauptplattform orientiert ist, wobei das Raumfahrzeug ferner Mittel (10) zur Orientierung der Hauptplattform durch Drehung umfasst, die dafür eingerichtet sind, das Endgerät an Bord zu einem vom Fahrzeug entfernten optischen Übertragungsendgerät auszurichten.

6. Fahrzeug nach Anspruch 5, wobei die Mittel (10) zur Orientierung der Hauptplattform durch Drehung wenigstens einen gyroskopischen Krafterzeuger umfassen.

7. Fahrzeug nach Anspruch 5 oder 6, wobei das Endgerät an Bord ein Teleskop (110) und eine Feinausrichtvorrichtung (4) umfasst, die dafür eingerichtet ist, ein Bild (I) des entfernten Endgeräts in einer fokalen Ebene des Teleskops (P) zu verschieben, derart, dass eine Übertragungsrichtung (D) im Inneren des Übertragungsfeldes (C) des Endgeräts an Bord justiert wird.

8. Fahrzeug nach einem der Ansprüche 5 bis 7, umfassend einen Satelliten oder eine interplanetrare Sonde.
